# EUROPÄISCHE PATENTSCHRIFT

(11) **EP 2 429 733 B1**
(45) Veröffentlichungstag und Bekanntmachung des Hinweises auf die Patenterteilung: **09.04.2014**
(21) Anmeldenummer: 10719916.8
(22) Anmeldetag: 06.05.2010
(51) Int. Cl.: B21D 37/16, B21D 53/16, F16D 23/02, B21K 1/30, B22F 5/08, B23P 15/14

(54) **VERFAHREN ZUR HERSTELLUNG EINES BESTANDTEILS EINER SYNCHRONISIERUNGSEINRICHTUNG FÜR EIN SCHALTGETRIEBE**
METHOD FOR PRODUCING A COMPONENT OF A SYNCHRONIZATION DEVICE FOR A MANUAL TRANSMISSION
PROCÉDÉ DE FABRICATION D'UN ÉLÉMENT CONSTITUTIF D'UN DISPOSITIF DE SYNCHRONISATION POUR BOÎTE DE VITESSES

(30) Priorität: 14.05.2009 DE 102009021307
(43) Veröffentlichungstag der Anmeldung: 21.03.2012
(73) Patentinhaber: Diehl Metall Stiftung & Co. KG, 90552 Röthenbach (DE)
(72) Erfinder: MERKLEIN, Marion, 90425 Nürnberg (DE); DÖRNHÖFER, Martin, 91245 Simmelsdorf (DE); HOLDERIED, Meinrad, 91338 Igensdorf (DE)
(74) Vertreter: Diehl Patentabteilung
(86) Internationale Anmeldenummer: PCT/EP2010/002772
(87) Internationale Veröffentlichungsnummer: WO 2010/130366

(56) Entgegenhaltungen:
- EP-A1- 0 070 952
- EP-A1- 1 690 952
- EP-A1- 1 990 556
- DE-A1- 19 537 209
- JP-A- 8 120 427
- JP-A- 8 290 227
- JP-A- 11 223 225
- US-A- 5 326 646

## Beschreibung

Die Erfindung betrifft ein Verfahren zur Herstellung eines Bestandteil einer Synchronisierungseinrichtung für ein Schaltgetriebe nach dem Oberbegriff des Anspruchs 1 sowie einen Bestandteil einer Synchronisierungseinrichtung für ein Schaltgetriebe.

Ein solches Verfahren ist aus der DE 35 19 811 C2 bekannt. Dabei wird eine aus einem Metallblech gestanzte Ronde aufeinanderfolgend einer Vielzahl von Kaltumformschritten unterzogen. Zur Herstellung einer bestimmten vorgegebenen, sich lediglich über einen Teilabschnitt des Bauteils erstreckenden Kontur, z. B. einer Verzahnung, sind überdies oft mehrere aufeinanderfolgende Kaltumformteilschritte erforderlich. Dabei werden zunächst Vorformen der Kontur und in einem letzten Kaltumformteilschritt schließlich die Kontur hergestellt. Für jeden der Kaltumformteilschritte ist die Bereitstellung eines komplexen und teuren Umformwerkzeugs erforderlich Bei einer Änderung der Kontur ist es erforderlich, die entsprechenden Umformwerkzeuge zu ändern. Insgesamt ist das bekannte Verfahren also aufwändig und teuer.

Ein weiterer Nachteil des bekannten Verfahrens ist es, dass die damit beispielsweise hergestellten Synchronringe nachträglich in deren Funktionsbereichen, beispielsweise bei Konturen, wie Verzahnungen, Indexnocken, Zentriernocken oder Mitnehmerlappen, gehärtet werden müssen.

Aus der DE 195 37 209 A1 ist ein Verfahren zum Herstellen von Synchronringen bekannt, Dabei werden die Synchronringe bei Temperaturen zwischen 850°C und 1000°C gehärtet, auf ein rotationssymmetrisches Formwerkzeug aufgesteckt und nachfolgend abgeschreckt.

Aufgabe der vorliegenden Erfindung ist es, die Nachteile nach dem Stand der Technik zu beseitigen. Es soll insbesondere ein möglichst einfaches und kostengünstiges Verfahren zur Herstellung eines Bestandteils einer Synchronisierungseinrichtung für ein Schaltgetriebe, insbesondere eines Synchronrings, angegeben werden. Ein weiteres Ziel der Erfindung besteht in der Angabe eines möglichst kostengünstig und einfach herstellbaren Bestandteils einer Synchronisierungseinrichtung für ein Schaltgetriebe, insbesondere eines Synchronrings.

Diese Aufgabe wird durch die Merkmale des Anspruchs 1 gelöst. Zweckmäßige Ausgestaltungen der Erfindung ergeben sich aus den Merkmalen der Ansprüche 2 bis 14.

Nach Maßgabe der Erfindung ist bei einem Verfahren zur Herstellung eines Bestandteils einer Synchronisierungseinrichtung für ein Schaltgetriebe, insbesondere eines Synchronrings, vorgesehen, dass zumindest einer der Umformschritte ein Warmumformschritt ist, bei dem die Ronde partiell auf eine Temperatur von mehr als 600°C aufgeheizt und im partiell aufgeheizten Umformabschnitt nachfolgend umgeformt wird.

In Abkehr vom Stand der Technik werden erfindungsgemäß die mehreren Kaltumformteilschritte zur Herstellung einer gewünschten Kontur jeweils durch einen einzigen Warmumformschritt ersetzt. Zur Durchführung des erfindungsgemäßen Warmumformschritts wird die Ronde lediglich abschnittsweise, nämlich im Bereich des umzuformenden Umformabschnitts, auf eine Temperatur von mehr als 600°C, vorzugsweise auf eine Temperatur im Bereich von 650°C bis 850°C, aufgeheizt und anschließend in diesem partiell aufgeheizten Umformabschnitt umgeformt. Dabei kann der umgeformte Abschnitt mit einer vorgegebenen Abkühlgeschwindigkeit abgekühlt und damit ein bestimmtes Gefüge eingestellt werden.

Das partielle Aufheizen der Ronde wird mittels Laser oder Induktion durchgeführt. Mit den genannten Verfahren ist es möglich, besonders schnell eine hohe Wärmeenergie auf den umzuformenden Abschnitt der Ronde zu übertragen. Der Umformabschnitt der Ronde beträgt in der Regel weniger als 50 %, in Ausgestaltungen vorzugsweise weniger als 30 %, insbesondere weniger als 20 %, ihres Volumens. D. h. beim erfindungsgemäß vorgeschlagenen partiellen Aufheizen des Umformabschnitts wird ausschließlich dieser auf die angegebene Temperatur aufgeheizt. Die übrigen Abschnitte der Ronde werden nicht bis auf diese Temperatur aufgeheizt.

Nach einer vorteilhaften Ausgestaltung wird die Ronde mittels Stanzen hergestellt. Im Sinne der vorliegenden Erfindung wird der Begriff "Ronde" allgemein verstanden. Es handelt sich dabei allgemein um ein Metallblech mit einer im Wesentlichen runden äußeren Kontur. Im Sinne der vorliegenden Erfindung kann es sich bei einer Ronde insbesondere auch um einen ringförmigen Körper handeln. Das vorgeschlagene Verfahren der Herstellung der Ronde mittels Stanzen ist besonders kostengünstig. Selbstverständlich ist es auch möglich, die Ronde mit anderen gängigen Verfahren, beispielsweise Sägen, Wasserstrahl- oder Laserschneiden, herzustellen.

Zweckmäßigerweise ist zumindest einer der Umformschritte ein Kaltumformschritt, vorzugsweise Tiefziehen. Ein solcher Kaltumformschritt, wie er nach dem Stand der Technik bekannt ist, wird insbesondere dann beibehalten, wenn er in einem einzigen Schritt durchgeführt werden kann. Beispielsweise ist es möglich, der Ronde in einem Kaltumformungsschritt eine kegelige Form zu verleihen.

Vorteilhafterweise ist die Ronde aus Stahl, vorzugsweise aus einer Stahllegierung, hergestellt. Soll ein Bauteil umgeformt, nicht jedoch gehärtet werden, haben sich mikrolegierte Stähle, wie z. B. HC260LA und niedrig- oder unlegierte Stähle, wie beispielsweise DC04 besonders bewährt. Soll ein Bauteil zumindest in Teilbereichen gehärtet werden, haben sich Standard-Vergütungsstähle besonders bewährt, wie sie z. B. in der EN 10132 definiert sind. Geeignet sind auch Stähle wie C45. Auch Stahllegierungen, wie z. B. 22MnB5 oder 80CrV2, haben sich als zweckmäßig erwiesen.

Nach einer vorteilhaften Ausgestaltung wird beim Warmumformschritt die Ronde im Umformabschnitt verformt und anschließend zumindest teilweise gehärtet. Zu diesem Zweck wird der Umformabschnitt auf eine Temperatur oberhalb der Austenitisierungstemperatur aufgeheizt. Die Austenitisierungstemperatur hängt vom Stahl bzw. von der Stahllegierung ab. Sie liegt üblicherweise im Bereich von 850°C bis 1000°C. Das nach dem Umformen erfolgende Abschrecken des auf eine Temperatur oberhalb der Austenitisierungstemperatur aufgeheizten Umformabschnitts bewirkt eine Härtung desselben. Bevorzugt erfolgt das Abschrecken durch zumindest teilweises Berühren des Umformabschnitts (Kontakthärten) mit einer Wärmesenke, wie beispielsweise einer an die Form des Umformabschnitts angepasste Metallform. Durch Anwendung der vorgeschlagenen Verfahrensschritte kann eine Härtung von ausgewählten Bereichen des Umformabschnitts vorteilhaft erfolgen.

Nach einer besonders vorteilhaften Ausgestaltung wird beim Warmumformschritt die Ronde im Umformabschnitt nicht nur verformt, sondern auch pressgehärtet. Zu diesem Zweck wird der Umformabschnitt auf eine Temperatur oberhalb der Austenitisierungstemperatur aufgeheizt. Die Austenitisierungstemperatur hängt vom Stahl bzw. von der Stahllegierung ab. Sie liegt üblicherweise im Bereich von 850°C bis 1000°C. Das beim Umformen gleichzeitig erfolgende Abschrecken des auf eine Temperatur oberhalb der Austenitisierungstemperatur aufgeheizten Umformabschnitts bewirkt eine Härtung desselben. Durch Anwendung der vorgeschlagenen Verfahrensschritte kann das nach dem Stand der Technik sich an die Formgebung anschließende Härtungsverfahren entfallen. Formgebung und Härtung können nach dem erfindungsgemäß vorgeschlagenen Verfahren gleichzeitig erfolgen. Infolgedessen ist das erfindungsgemäß vorgeschlagene Verfahren besonders effizient.

Nach einer weiteren vorteilhaften Ausgestaltung wird die zum partiellen Aufheizen erforderliche Wärmeenergie dem Umformabschnitt in weniger als drei Sekunden, vorzugsweise weniger als einer Sekunde, zugeführt. Damit ist es möglich, den Wärmeeintrag auf den vorgegebenen Umformabschnitt begrenzt zu halten. Außerdem ermöglichen die vorgeschlagenen kurzen Wärmeeintragszeiten eine besonders rasche Verfahrensführung.

Als besonders zweckmäßig, insbesondere bei der Massenproduktion, hat es sich erwiesen, zum Abschrecken ein gekühltes Umformwerkzeug zu verwenden. Durch den Kontakt mit dem Umformwerkzeug wird der Umformabschnitt auf die gewünschte Kontur umgeformt, dabei gleichzeitig abgeschreckt und infolgedessen gehärtet. Dabei wird das umgeformte Blech üblicherweise bis zu einer Tiefe von 0,5 bis 2 mm gehärtet.

Mit dem erfindungsgemäßen Verfahren ist es insbesondere auch möglich, nach dem Warmumformschritt, die Ronde zu stanzen. Das gilt auch dann, wenn mit dem Warmumformschritt ein Umformbereich der Ronde gehärtet worden ist. In diesem Fall beschränkt sich der nachfolgende Schritt des Stanzens zweckmäßigerweise auf diejenigen Bereiche der Ronde, welche zuvor nicht gehärtet worden sind.

Nach einer weiteren vorteilhaften Ausgestaltung wird der Warmumformschritt als ein Takt in einer taktweisen Abfolge von Umform- und/oder Stanzschritten durchgeführt. D. h. der Warmumformschritt kann in eine taktweise arbeitende Linie zur Massenherstellung von Bestandteilen einer Synchronisierungseinrichtung implementiert werden.

Entsprechend dem hierin vorgeschlagenen Verfahren weist ein nach dem Verfahren hergestellter Bestandteil einer Synchronisierungseinrichtung für ein Schaltgetriebe, insbesondere ein Synchronring, zumindest einen pressgehärteten Umformabschnitt auf. Der pressgehärtete Umformabschnitt kann eine der folgenden Gestaltungen aufweisen: Verzahnung, Indexnocken, Zentriernocken, Mitnehmerlappen, Mitnehmernocken, Verbindungssteg.

Im Sinne der vorliegenden Erfindung wird unter einer "Synchronisierungseinrichtung" eine Einrichtung verstanden, die eine Drehzahldifferenz zwischen Welle und zu schaltendem Gangrad angleicht. Neben wenigstens einem Synchronring kann die Synchronisierungseinrichtung auch weitere Bestandteile, wie eine Schiebemuffe, einen Muffenträger sowie ein Gang- oder Losrad umfassen. Beispielhaft wird auf die aus der DE 10 2005 035 941 B3 offenbarte Synchronisierungseinrichtung verwiesen. Der Offenbarungsgehalt des Ausführungsbeispiels dieses Dokuments wird hiermit einbezogen.

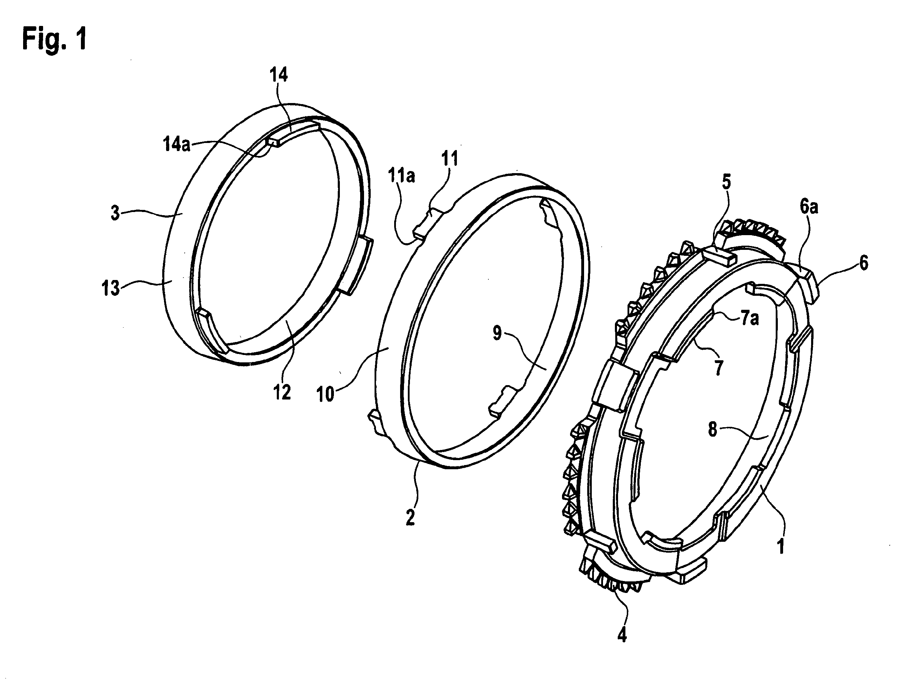

Nachfolgend werden Ausführungsbeispiele der Erfindung, insbesondere anhand der einzigen Zeichnung näher erläutert.

Die einzige Zeichnung zeigt in perspektivischer Ansicht ein Synchronisierungspaket einer (hier nicht weiter dargestellten) Synchronisierungseinrichtung. Das

Synchronisierungspaket umfasst einen Außenring 1, einen Zwischenring 2 und einen Innenring 3.

Der Außenring ist an seinem Außenumfang abschnittsweise mit einer Verzahnung bzw. einer Sperrverzahnung 4 versehen. Mit dem Bezugszeichen 5 sind Zentriernocken und mit dem Bezugszeichen 6 Indexnocken mit Indexnocken-Seitenflächen 6a bezeichnet, welche zwischen den Abschnitten der Verzahnung 4 angebracht sind. Vom Innenumfang erstrecken sich Mitnehmerlappen 7 mit Mitnehmerlappen-Seitenflächen 7a. Eine innere Umfangsfläche des Außenrings 1 bildet eine erste Reibfläche 8.

Der Zwischenring 2 weist an seinem Innenumfang eine zweite Reibfläche 9 und an seinem Außenumfang eine dritte Reibfläche 10 auf. Mit dem Bezugszeichen 11 sind in axialer Richtung sich erstreckende Mitnehmernocken mit Mitnehmernocken-Seitenflächen 11a bezeichnet.

Der Innenring 3 weist an seinem Innenumfang eine vierte Reibfläche 12 und an seinem Außenumfang eine fünfte Reibfläche 13 auf. Mit dem Bezugszeichen 14 sind in Richtung des Außenrings 1 sich axial erstreckende Verbindungsnocken bezeichnet.

### Herstellung des Außenrings

Zur Herstellung des Außenrings 1 wird zunächst aus einem geeigneten Stahlblech, beispielsweise der Stahlsorte C45 oder 80CrV2, eine ringartig ausgebildete Ronde ausgestanzt. Anschließend wird der Ronde in einem herkömmlichen Tiefziehschritt eine kegelartige Geometrie verliehen. Danach erfolgt ein Warmumform- und Kalibrierschritt, bei dem der hergestellte Kegelabschnitt abschnittsweise zunächst auf eine Temperatur oberhalb der Austenitisierungstemperatur erhitzt und dann mit einem gekühlten Presswerkzeug kalibriert und pressgehärtet wird.

Nachfolgend wird in einem weiteren Schritt die Verzahnung 4 mittels Stanzen vorgeformt. Die vorgeformte Verzahnung wird partiell auf eine Temperatur oberhalb der Austenitisierungstemperatur erhitzt und dann mit einem gekühlten Presswerkzeug in einem ersten Warmumformschritt auf ihre vorgegebene Kontur umgeformt. Dabei erfolgt gleichzeitig eine Presshärtung der Verzahnung 4.

In weiteren Warmumformschritten erfolgt sodann das Umformen der Index- 5 sowie der Zentriernocken 6. Auch dabei werden die entsprechenden Umformbereiche partiell auf eine Temperatur oberhalb der Austenitisierungstemperatur erhitzt und nachfolgend mit einem gekühlten Presswerkzeug auf ihre vorgegebene Kontur umgeformt und dabei gleichzeitig pressgehärtet.

In einem weiteren Stanzschritt werden die Mitnehmerlappen 7 vorgeformt. Die Mitnehmerlappen 7 werden anschließend in einem weiteren Warmumformschritt partiell wiederum auf eine Temperatur oberhalb der Austentitisierungstemperatur erwärmt und mit einem gekühlten Presswerkzeug in ihre vorgegebene Kontur umgeformt. Sie werden dabei gleichzeitig pressgehärtet.

Im Rahmen der vorliegenden Erfindung muss nicht jeder Warmumformschritt mit einer Presshärtung einhergehen. Es ist beispielsweise auch möglich, einen oder mehrere der Warmumformschritte bei einer Temperatur unterhalb der Austenitisierungstemperatur durchzuführen.

Sofern eine Härtung des warmumzuformenden Umformbereichs erzielt werden soll und zu diesem Zweck die Presshärtung mit dem Umformwerkzeug nicht ausreichen sollte, kann zusätzlich nach einer nochmaligen Erwärmung auf eine Temperatur oberhalb der Austentitisierungstemperatur eine, z. B. seitliche, Kontaktpressung erfolgen. Das ist insbesondere bei der Herstellung der Indexnocken-Seitenflächen 2a, der Mitnehmernocken-Seitenflächen 8a sowie der Verbindungssteg-Seitenflächen 12a und der Mitnehmerlappen-Seitenflächen 3a zweckmäßig.

Der Zwischenring 2 sowie der Innenring 3 können in ähnlicher Weise hergestellt werden. Auch hier wird zunächst eine ringförmige Ronde ausgestanzt. Anschließend wird der Ronde durch Tiefziehen eine kegelförmige Form verliehen. Das Kalibrieren des Kegels erfolgt wiederum in einem Warmumform- und Kalibrierschritt. Dabei lässt sich die Kegelgeometrie exakt einstellen. Gleichzeitig lässt sich damit eine Presshärtung, insbesondere der Reibflächen, erzielen.

Anschließend erfolgt die Herstellung der Mitnehmernocken 11 bzw. Verbindungsnocken 14. Diese können ebenso wie die Zentrier- 5 und Indexnocken 6 zunächst mittels Stanzen vorgeformt und anschließend in einem einzigen Warmumformschritt auf ihre Endkontur umgeformt werden, wobei jeweils eine Presshärtung erfolgen kann. Die Mitnehmernocken-Seitenflächen 11a sowie die Verbindungssteg-Seitenflächen 14a können nötigenfalls durch seitliche Kontaktpressung gehärtet werden.

Mit dem erfindungsgemäß vorgeschlagenen Verfahren wird der Herstellungsprozess, insbesondere bei Synchronringen, wesentlich vereinfacht und kostengünstiger gestaltet. Dazu können herkömmliche Kaltumformschritte mit Warmumformschritten kombiniert werden. Die Warmumformschritte ermöglichen einen hohen Umformgrad. Es ist möglich, mit einem einzigen Warmumformschritt eine Mehrzahl der zur Herstellung desselben Umformgrads erforderlichen Kaltumformteilschritte zu ersetzen. Gleichzeitig kann mit dem Warmumformschritt eine Presshärtung der jeweiligen Funktionsflächen erreicht werden. Insgesamt ergibt sich dadurch eine deutlich reduzierte Zahl an Fertigungsschritten. Ein kostenintensives nachgeschaltetes Härtungsverfahren kann entfallen.

### Bezugszeichenliste

- 1: Außenring
- 2: Zwischenring
- 3: Innenring
- 4: Verzahnung
- 5: Indexnocken
- 6: Zentriernocken
- 6a: Zentriernocken-Seitenfläche
- 7: Mitnehmerlappen
- 7a: Mitnehmerlappen-Seitenfläche
- 8: erste Reibfläche
- 9: zweite Reibfläche
- 10: dritte Reibfläche
- 11: Mitnehmernocken
- 11a: Mitnehmernocken-Seitenfläche
- 12: vierte Reibfläche
- 13: fünfte Reibfläche
- 14: Verbindungssteg
- 14a: Verbindungssteg-Seitenfläche

## Patentansprüche

1. Verfahren zur Herstellung eines Bestandteils einer Synchronisierungseinrichtung für ein Schaltgetriebe, insbesondere eines Synchronrings (1, 2, 3), wobei eine aus Metall hergestellte Ronde in mehreren Umformschritten umgeformt wird,
wobei zumindest einer der Umformschritte ein Warmumformschritt ist,
**dadurch gekennzeichnet, dass**
bei dem Umformschritt die Ronde mittels Laser oder Induktion ausschließlich in einem Umformabschnitt partiell auf eine Temperatur von mehr als 600°C aufgeheizt und im partiell aufgeheizten Umformabschnitt nachfolgend umgeformt wird, wobei Umformabschnitt der Ronde weniger als 50 % ihres Volumens beträgt.

2. Verfahren nach Anspruch 1, wobei die Ronde mittels Stanzen hergestellt wird.

3. Verfahren nach einem der vorhergehenden Ansprüche, wobei zumindest einer der Umformachritte ein Kaltumformschritt, vorzugsweise Tiefziehen, ist.

4. Verfahren nach einem der vorhergehenden Ansprüche, wobei die Ronde aus Stahl, vorzugsweise aus einer Stahllegierung, hergestellt ist.

5. Verfahren nach einem der vorhergehenden Ansprüche, wobei der Umformabschnitt auf eine Temperatur oberhalb der Austenitisierungstemperatur, vorzugsweise auf eine Temperatur von 850°C bis 1000°C, aufgeheizt wird.

6. Verfahren nach einem der vorhergehenden Ansprüche, wobei der Umformabschnitt zumindest teilweise abgeschreckt und infolge dessen gehärtet wird, bevorzugt durch Kontakthärtung.

7. Verfahren nach einem der vorhergehenden Ansprüche, wobei der Umformabschnitt beim Umformen abgeschreckt und infolge dessen gehärtet wird.

8. Verfahren nach einem der vorhergehenden Ansprüche, wobei das partielle Aufheizen der Ronde mittels Laser oder Induktion durchgeführt wird.

9. Verfahren nach einem der vorhergehenden Ansprüche, wobei die zum partiellen Aufheizen erforderliche Wärmeenergie dem Umformabschnitt in weniger als 3 Sekunden, vorzugsweise weniger als 1 Sekunde, zugeführt wird.

10. Verfahren nach einem der vorhergehenden Ansprüche, wobei zum Abschrecken ein gekühltes Umformwerkzeug verwendet wird.

11. Verfahren nach einem der vorhergehenden Ansprüche, wobei der Warmumformschritt als ein Takt in einer taktweisen Abfolge von Umform- und/oder Stanzschritten durchgeführt wird.

12. Verfahren nach einem der vorhergehenden Ansprüche, wobei der Umformabschnitt pressgehärtet wird.

13. Verfahren nach Anspruch 12, wobei der pressgehärtete Umformabschnitt eine der folgenden Gestaltungen aufweist: Verzahnung (4), Indexnocken (5), Zentriernocken (6), Mitnehmerlappen (7), Mitnehmernocken (11), Verbindungssteg (14).

14. Verfahren nach Anspruch 1, wobei der Umformabschnitt der Ronde weniger als 30 %, insbesondere weniger als 20 %, ihres Volumens beträgt.

## Claims

1. Method for producing a component of a synchronization device for a manual transmission, in particular a synchronizer ring (1, 2, 3), wherein a round blank produced from metal is formed in a plurality of forming steps,
wherein at least one of the forming steps is a hot forming step,
**characterized in that**
in the forming step the round blank is partially heated to a temperature of more than 600°C by means of laser or induction exclusively in one forming portion and is then formed in the partially heated forming portion, wherein the forming portion of the round blank amounts to less than 50% of the volume thereof.

2. Method according to Claim 1, wherein the round blank is produced by means of stamping.

3. Method according to either of the preceding claims, wherein at least one of the forming steps is a cold forming step, preferably deep drawing.

4. Method according to one of the preceding claims, wherein the round blank is produced from steel, preferably from a steel alloy.

5. Method according to one of the preceding claims, wherein the forming portion is heated to a temperature above the austenitization temperature, preferably to a temperature of 850°C to 1000°C.

6. Method according to one of the preceding claims, wherein the forming portion is at least partially quenched and consequently hardened, preferably by contact hardening.

7. Method according to one of the preceding claims, wherein the forming portion is quenched during forming and consequently hardened.

8. Method according to one of the preceding claims, wherein the round blank is partially heated by means of laser or induction.

9. Method according to one of the preceding claims, wherein the thermal energy required for partial heating is supplied to the forming portion in less than 3 seconds, preferably less than 1 second.

10. Method according to one of the preceding claims, wherein a cooled forming tool is used for quenching.

11. Method according to one of the preceding claims, wherein the hot forming step is carried out as a cycle in a cyclic sequence of forming and/or stamping steps.

12. Method according to one of the preceding claims, wherein the forming portion is press-hardened.

13. Method according to Claim 12, wherein the press-hardened forming portion has one of the following configurations: toothing (4), indexing stud (5), centering stud (6), driving tab (7), driving stud (11), connecting web (14).

14. Method according to Claim 1, wherein the forming portion of the round blank amounts to less than 30%, in particular less than 20%, of the volume thereof.

## Revendications

1. Procédé de fabrication d'un élément constitutif d'un dispositif de synchronisation pour une boîte de vitesses, en particulier d'une bague de synchronisation (1, 2, 3), dans lequel on déforme un flan circulaire fabriqué en métal en plusieurs étapes de déformation, dans lequel au moins une des étapes de déformation est une étape de déformation à chaud, **caractérisé en ce que**, lors de l'étape de déformation, on chauffe le flan circulaire partiellement à une température de plus de 600°C exclusivement dans une partie à déformer au moyen d'un laser ou par induction et on le déforme ensuite dans la partie à déformer partiellement chauffée, la partie à déformer du flan circulaire valant moins de 50 % de son volume.

2. Procédé selon la revendication 1, dans lequel on fabrique le flan circulaire par estampage.

3. Procédé selon l'une quelconque des revendications précédentes, dans lequel au moins une des étapes de déformation est une étape de déformation à froid, de préférence un emboutissage.

4. Procédé selon l'une quelconque des revendications précédentes, dans lequel le flan circulaire est fabriqué en acier, de préférence en un acier allié.

5. Procédé selon l'une quelconque des revendications précédentes, dans lequel on chauffe la partie à déformer à une température supérieure à la température d'austénitisation, de préférence à une température de 850°C à 1000°C.

6. Procédé selon l'une quelconque des revendications précédentes, dans lequel on trempe au moins partiellement la partie à déformer et par conséquent on la durcit, de préférence par trempe par contact.

7. Procédé selon l'une quelconque des revendications précédentes, dans lequel on trempe et par conséquent on durcit la partie à déformer lors de la déformation.

8. Procédé selon l'une quelconque des revendications précédentes, dans lequel on effectue le chauffage partiel du flan circulaire au moyen d'un laser ou par induction.

9. Procédé selon l'une quelconque des revendications précédentes, dans lequel on fournit l'énergie thermique nécessaire pour le chauffage partiel à la partie à déformer en moins de 3 secondes, de préférence en moins de 1 seconde.

10. Procédé selon l'une quelconque des revendications précédentes, dans lequel on utilise pour la trempe un outil de déformation refroidi.

11. Procédé selon l'une quelconque des revendications précédentes, dans lequel on effectue l'étape de déformation à chaud comme un pas dans une séquence cadencée d'étapes de déformation et/ou d'estampage.

12. Procédé selon l'une quelconque des revendications précédentes, dans lequel on durcit à la presse la partie à déformer.

13. Procédé selon la revendication 12, dans lequel la partie à déformer durcie à la presse présente une des configurations suivantes: denture (4), cames d'indexage (5), cames de centrage (6), pattes d'entraînement (7), taquets d'entraînement (11), nervure d'assemblage (14).

14. Procédé selon la revendication 1, dans lequel la partie à déformer vaut moins de 30 %, en particulier moins de 20 %, de son volume.
